# EUROPEAN PATENT SPECIFICATION

(11) **EP 3 712 393 B1**
(45) Date of publication and mention of the grant of the patent: **06.11.2024**
(21) Application number: 20158333.3
(22) Date of filing: 19.02.2020
(51) Int. Cl.: F01D 25/16, F01D 25/24

(54) **GAS TURBINE ENGINE WITH BEARING SUPPORT STRUCTURE**
GASTURBINENTRIEBWERK MIT LAGERTRÄGERSTRUKTUR
MOTEUR À TURBINE À GAZ AVEC STRUCTURE DE SUPPORT DE PALIER

(30) Priority: 19.03.2019 GB 201903703
(43) Date of publication of application: 23.09.2020
(73) Proprietor: Rolls-Royce plc, London N1 9FX (GB)
(72) Inventor: Chilton, Nicholas, Derby, Derbyshire DE24 8BJ (GB); Hicks, Robert, Derby, Derbyshire DE24 8BJ (GB); Keown, James, Derby, Derbyshire DE24 8BJ (GB)
(74) Representative: Rolls-Royce plc

(56) References cited:
- EP-A1- 3 002 433
- EP-A1- 3 029 359
- EP-A1- 3 124 752
- EP-A2- 1 396 611
- EP-A2- 1 447 543
- EP-A2- 2 327 859
- WO-A2-2014/197080
- FR-A1- 2 152 466
- FR-A1- 2 987 402
- FR-A1- 3 013 388

## Description

The present invention relates to a support structure, particularly to a gas turbine engine comprising a bearing support structure.

In a known configuration, a support structure includes a ring of stationary aerofoils (stators) that are located near the air intake of the engine core. The support structure extends between and supports a fan bearing assembly and a compressor bearing assembly respectively.

A front portion of a conventional support structure is conical in shape so as to define an internal volume within the support structure, i.e. around the fan shaft. As such, the bearing support structure may house engine components for which access is needed for assembly, periodic maintenance and servicing.

In order to access the engine components, a front portion of the support structure is removed. This requires a releasable connection in the forward end of the support structure between the fan bearing assembly and the stator, typically at a large diameter, larger than the gearbox. In the case that very large radial loads are transmitted from the fan into the support structure, movement may occur in the releasable connection (i.e. a bolt may slip or unwind) and therefore compromise the joint's structural duty and ability to locate components. This problem is exacerbated on modern fans which tend to be large in diameter with a low count of wide chord blades, e.g. as may be used in a geared turbofan engine, due to the high loads which may be experienced, particularly during a fan blade-off scenario. Fan blade-off load management may be further complicated in a geared turbofan architecture as typical fusing systems, which fail so as to allow the now out-of-balance fan set to rotate about its new centre of gravity, may not be practical as the space required could detrimentally effect the architectural design, e.g. cause the gearbox design to be very large and heavy.

It is possible to design a bolted joint on the fan load path that can withstand loads generated during a fan blade-off scenario. However such a joint relies on generating sufficient frictional force in the bolted joint to prevent slippage. Any slippage will provide a mechanism to unwind the bolt. Coefficient of friction is difficult to predict and so must be assumed to be low. The resulting joints are very large and heavy, which is contrary to the general aim of weight reduction and greater fuel efficiency within the aerospace sector.

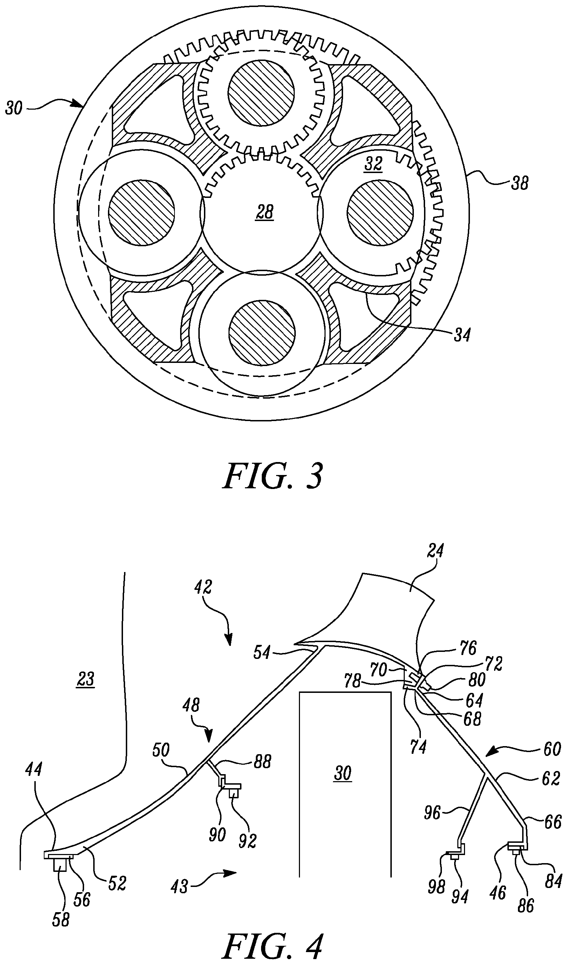

A specific additional function of a bearing support structure containing an epicyclic gearing mechanism, such as typically used in a geared turbofan, is to react the torque imposed on the static "ring" gear (Item 38 in Fig.3). The torque reaction load travels through the support structure to the engine casings and mounts. With the torque reaction load being passed into the support structure, this may further drive the design of the releasable connection to also be capable of transferring this torque. Again a suitable bolted joint will become larger and heavier to accommodate this.

It is an aim of the present disclosure to provide a support structure configuration that addresses one of more the aforementioned problems or at least provides a useful alternative to known support structure configurations.

WO 2014/197080 relates to a method for assembling a turbofan engine comprising coupling a bearing assembly and a shaft as a unit to a bearing support. A transmission and the fan shaft are installed to a front frame assembly. The bearing assembly and shaft are installed as a unit so that the shaft engages a central gear of the transmission and the bearing support engages the front frame assembly. A fan rotor bearing support structure forward of the transmission comprises a forward web and an aft web which join at a root of an outboard/aft mounting flange, The outboard/aft mounting flange is radially outboard of the periphery of the transmission.

EP 3002433 relates to a geared architecture for a gas turbine engine comprising an output shaft for connection with a fan, an input shaft and a gearbox connecting the input shaft with the output shaft. The gearbox has a forward planet carrier plate supported by a forward radially fixed bearing structure and a rearward planet carrier plate supported by a rearward radially fixed bearing structure.

EP 1447543 relates to a bearing support for a rotor of an aircraft turbine engine that includes a front bearing and a front bearing support and a bearing strut for attaching the front bearing to the aircraft turbine engine support structure.

EP 3124752 relates to a gas turbine engine including an aft bearing assembly including at least two bearings that is positioned at least partially in an aft sump and supports a shaft in the turbine section.

FR 3013388 relates to a gas turbine engine having modules including a gear reduction module and a bearing mounting assembly.

EP2327859 relates to a mounting system for a planetary geartrain in a gas turbine engine that comprises a support strut, a deflection flange and a deflection limiter.

The present invention provides a gas turbine engine as set out in the appended claims.

The first bearing assembly may comprise a fan bearing assembly and/or the second bearing assembly may comprise a compressor bearing assembly.

The first section and/or the second section may be substantially conical in form.

The gearbox may be mounted radially inside an inner end of the plurality of stator vanes and/or within the axial extent of the first section and/or the second section.

The first section may comprise a support for a gearbox output bearing and/or the second section may comprise a support for a gearbox input bearing.

The bearing support structure may comprise an array of at least twenty stator vanes that may be circumferentially spaced about the longitudinal axis.

Arrangements of the present invention are particularly beneficial for fans that are driven via a gearbox. Accordingly, the gas turbine engine comprises a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, or 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 2250 cm to 300 cm (for example 2450 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 3320 cm to 380 cm may be in the range of from 1200 rpm to 2000 rpm, for example in the range of from 1300 rpm to 1800 rpm, for example in the range of from 1400 rpm to 18600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)2). The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-'s, 105 Nkg-'s, 100 Nkg-'s, 95 Nkg-'s, 90 Nkg-'s, 85 Nkg⁻¹s or 80 Nkg-'s. The specific thrust may be in an inclusive range bounded by any two of the values in the previous sentence (i.e. the values may form upper or lower bounds), for example in the range of from 80 Nkg-'s to 100 Nkg⁻¹s, or 85 Nkg⁻¹s to 95 Nkg-'s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a close up sectional side view of a bearing support structure of the present invention for a gas turbine engine; and
**Figure 5** is a close up sectional side view of a further example of a bearing support structure of the present invention for a gas turbine engine.

Aspects and embodiments of the present invention will now be discussed with reference to the accompanying figures. Further aspects and embodiments will be apparent to those skilled in the art.

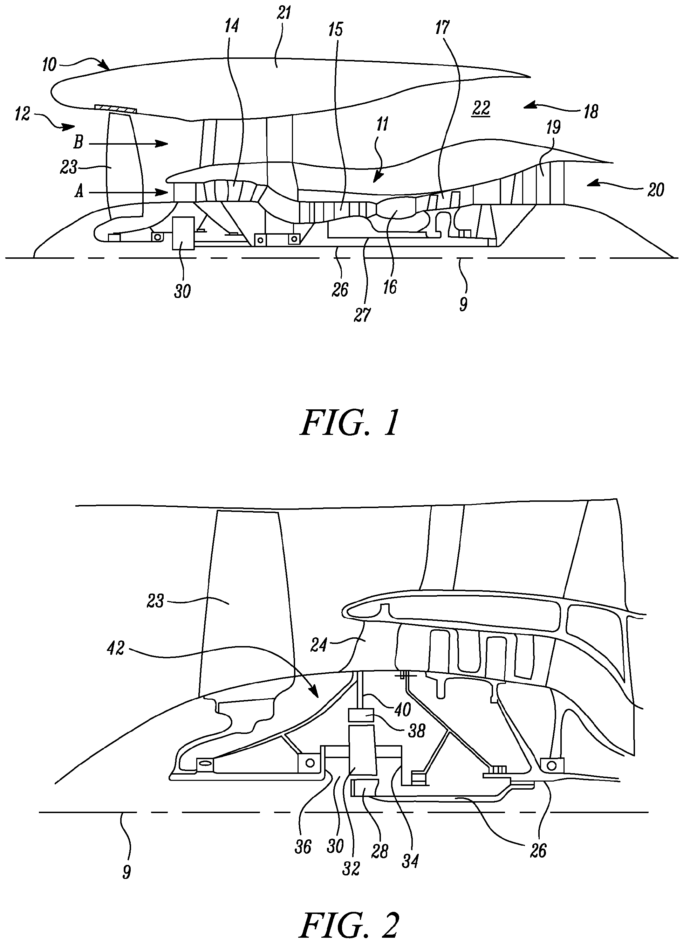

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2**. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the principal rotational axis 9. Radially outwardly of the planet gears 32 and intermeshing therewith is an annulus or ring gear 38 that is coupled, via linkages 40, to a stationary supporting structure or stator 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention.

Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present invention extends to a gas turbine engine having any arrangement of gearbox styles (for example star or planetary), support structures, input and output shaft arrangement, and bearing locations.

Optionally, the gearbox may drive additional components (e.g the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the engine core nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the principal rotational axis 9), a radial direction (in the bottom-to-top direction in Figure 1), and a circumferential direction (perpendicular to the page in the Figure 1 view). The axial, radial and circumferential directions are mutually perpendicular.

The following invention concerns a support structure (indicated generally as structure 42 in Figure 2 and Figure 4) located behind the fan 23, i.e. axially between the fan and the low pressure compressor 14. The support structure 42 supports bearings, to be described in further detail below, on a stator array 24.

In general terms, the support structure supports both a fan bearing, i.e. a bearing for the fan shaft. Additionally the support structure may support a compressor bearing, i.e. a bearing for a rotor shaft of the compressor 14.

The stator array 24 is conventionally referred to as the engine section stator.

The stator array is referred to herein as comprising a plurality of stator vanes, e.g. of aerofoil cross section extending into the core airflow A flow path upstream of the low pressure compressor 14.

A support structure 42 is shown in **Figure 4****.** The support structure 42 is located in the compressor region of the gas turbine engine 10. The support structure is located radially inside of the annular intake A of the engine core 11. The bearing support structure is located generally radially inward of the stator 24, i.e. between the radially inner end of the stator 24 and the principal rotational axis 9.

The bearing support structure 42 is annular in form, disposed about the principal rotational axis 9.

The bearing support structure is generally located axially between, and supporting, a bearing assembly of the fan 23 and a bearing assembly of a compressor.

The support structure 42 provides a housing for an internal area 43 or compartment of the engine 10.

The support structure 42 comprises a first section 48. The first section 48 is located forward, or upstream, of the support structure 42. The first section 48 comprises a wall portion 50 extending between a radially inner forward end 44 and the stator 24. The wall portion 50 is angled obliquely with respect to the principal rotational axis 9, i.e. is rearwardly slanted or leaning, towards the stator 24. The wall portion 50 may be angled between 20 and 70 degrees with respect to the principal rotational axis 9.

The first section 48 joins with the stator 24 at a rear/outer end 54 thereof.

The wall portion 50 may comprise a curved portion. The wall portion 50 may be curved at a forward portion 52 thereof. The wall portion 50 may comprise a linear portion. The wall portion 50 may comprise a substantially linear/straight portion, e.g. at a central and/or rear portion 54 thereof. The wall section may comprise one or more of: a linear portion, a curved portion, or a polygonal portion and combinations thereof.

The first section 48 may be annular in form, e.g. so as to comprise a conical shape. The first section 48 may comprise a truncated conical (frustoconical) shape. The first section 48 may be substantially rotationally symmetric about the principal rotational axis 9 (i.e. the wall portion 50 is substantially the same throughout rotation about the principal rotational axis 9).

The first section 48 comprises a support 56 for a fan bearing 58. The support 56 may be disposed at the forward portion 52 of the support structure and/or at the forward end 44 thereof. The support 56 is connected to a bearing 58 for rotationally supporting the fan 23. The support 56 may be connected to or integral with the outer race of the bearing 58.

The stator 24 is disposed radially outward from the first section 48. The stator 24 is disposed axially rearward from the first section. The stator 24 is connected to the rear and/or radially-inner portion 54 of the first section 48 and carries the first section 48.

The stator 24 is integrally formed with the first section 48 in this example. The stator 24 and the first section 48 are manufactured as an integral, single piece, unitary or monolithic component. The stator 24 and the first section 48 may be manufactured as a single casting to form a single integral piece, i.e. an annular/ring piece. The stator 24 and the first section 48 may be manufactured using an additive layer manufacturing technique to form a single integral piece. The stator 24 and the first section 48 may be manufactured using one or more pre-pregs and cured to form an integral piece.

In other examples, the stator 24 and first section could be formed as a fabrication of cast, forged or ALM portions. The relevant portions may be bonded, welded or fused together so as to form a unitary structure which is indivisible without damage to the structure.

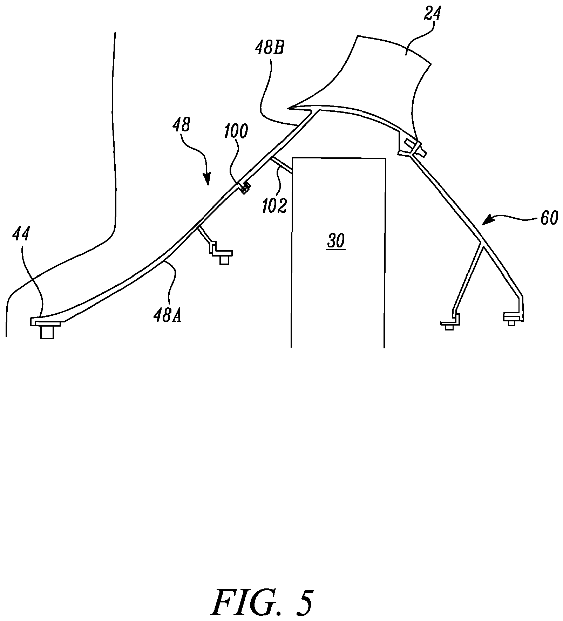

In other examples, e.g. as shown in **Figure 5****,** the stator 24 and the first section 48 may not be integral but have bolted joint 100, e.g. to make the relatively-large assembly easier to manufacture. The bolted joint 100 would be part way along the wall of the first section 48, i.e. the front cone. The joint 100 is a low diameter joint relative to the joint/interface 70 on the rear cone, to be described below. In such examples, the interface/joint in the front section 48 is not at a radial height sufficient to allow assembly, servicing and maintenance of the gearbox. That is to say the interface may be inaccessible from the front and/or closer to the axis (e.g. at a lower radial height) than the interface 70.

This bolted joint 100 may not be on the torque path, e.g. making it easier to design to accommodate ultimate events, such as a fan blade-off. As shown in Figure 5, the front section or front cone 48 may be split into two sections, a front portion 48A and a rear portion 48B joined together at the joint 100. The front portion 48A extends forwardly of the joint 100 towards the forward end 44. The rear portion 48B is joined to (i.e. integral with) the stator 24, e.g. extending a short distance radially inwardly of the stator 24. A gearbox 30 may be connected to the rear portion 48B, e.g. via an intermediate member 102, so that gearbox torque can be reacted by the stator 24 via the rear portion 48B of the front cone 48. In this way torque imposed on the static "ring" gear (Item 38 in Fig.3) is reacted via the rear portion 48B but not the front portion 48A and the joint 100 is removed from the torque path. The intermediate member 102 may depend from the relevant static part, e.g. ring gear 38, of the gearbox.

In either example of Figures 4 and 5, stators 24 are disposed circumferentially about the principal rotational axis 9 in an annular fashion to form a ring of stators. The stator 24 may comprise at least twenty stators. The stator 24 may comprise at least thirty or forty stators 24.

In examples described above, the stators 24 are structural, load-bearing members. In other examples, stators 24 may be axially separated into multiple narrow aerofoils that do not carry structural load and load carrying struts, i.e. which typically do not have an aerodynamic duty. The struts may be fore and/or aft of the aerofoils. Typically there would be at least three struts. The term 'stator(s)' as used herein refers to aerofoil(s)/vane(s) and/or strut(s), depending on which members carry the structural load.

The first section 48 comprising the plurality of stators 24 may form a unitary piece as shown in Figure 4 (i.e. to form a substantially conical wall portion comprising an annulus of stators 24).

The first section 48 in this example is configured such that a load path between the fan bearing 58 and the stator 24 is continuous. In other examples, as shown in Figure 5, the first section 48 comprises a discontinuity/joint 100 such that a load path between the fan bearing 58 and the stator 24 is discontinuous, i.e. extending across the interface 100 within section 48.

In various examples, the first section 48 (e.g. front portion 48A and/or rear portion 48B) may comprise a plurality of sectors. The sectors may comprise conical sectors. Each sector may comprise at least one stator 24. Each sector may comprise a plurality of stators 24. Each of the first section 48 (Figure 4) or the rear portion 48B (Figure 5) may be manufactured in single cast or die, or additive layer manufacturing process, to form an integral piece. The plurality sectors are then secured together to form the first section 48. The sectors may be releasably or non-releasably secured.

The following description of the support structure applies to the examples of both Figures 4 and 5.

The support structure 42 comprises a second section 60. The second section 60 is located at the rearward portion 66 or rear end 46 of the support structure 42. The second section 60 is located rearward with respect to the first section 48 and/or stator. The second section 60 may be located radially inward with respect to at least a portion the first section 48. The second section 60 may be located radially inward with respect to at least a portion the stator 24, e.g. an inner end of the stator 24. The second section 60 is formed separately (i.e. non integrally) with the first section 48 and stator 24.

The second section 60 comprises a wall portion 62 extending between the radially inner rearward portion 66 and a radially outer end 64, e.g. which is connected to the stator 24 in use. The radially inner rearward portion 66 may comprise a rear end 46 of the support structure 42 as a whole when assembled.

The wall portion 62 is angled forwardly/obliquely with respect to the principal rotational axis 9, e.g. toward the forward end 44 of the support structure. The wall portion 62 may be angled between 20 and 70 degrees with respect to the principal rotational axis 9 towards the forward end 44 of the support structure.

The second section 60 may be annular in form, e.g. comprising a conical shape. The second section 60 may comprise a truncated conical (frustoconical) shape. The second section 60 may be substantially rotationally symmetric about the principal rotational axis 9 (i.e. the wall portion 62 is substantially the same throughout rotation about the principal rotational axis 9).

The second section 60 is releasably connected/secured to the first section 48 to provide a housing or enclosure for the internal area 43 of the engine. The second section 60 may be releasably connected at a radially outer end 64 thereof. The second section is releasably connected to the stator 24. The second section may be releasably connected to the radially innermost portion of the stator 24. The second section may be releasably connected to a rearmost portion or edge of the stator 24.

The second section 60 and stator 24 are joined at an interface 70. A first portion/half of the interface 70 may be integrally formed with the stator 24. A second/opposing portion of the interface may be provided by the second section 60.

The second section 60 comprises an interface formation 68. The interface formation 68 is configured to engage with a corresponding interface portion provided on the first section 48. The first section interface portion may be provided on the stator 24, preferably, on a rearward portion or edge thereof.

The interface formation 68 comprises at least one flange. A first flange 72 is configured to engage a first face 76 provided on the stator 24. The flange may be angled with respect to the wall portion 62. The flange may be angled between 90 and 180 degrees with respect to the wall portion 62. A fastening mechanism/member 80 is configured to extend between the first flange 72 and the first face 76 to form a releasable connection therebetween.

The fastening mechanism/member 80 may comprise a bolt, although other conventional fasteners could be considered.

The interface formation 68 may comprise a further flange 74. The further flange 74 is configured to engage a corresponding second face provided on the stator. The further flange 74 may be angled with respect to the first flange 72. The faces of the opposing stator may be correspondingly angled. The angle may be between 45 and 180 degrees. The angle may be between 90 and 180 degrees. The angle may be 135 degrees.

Although not shown in the example of figure 4, a fastening member could be configured to extend between the further flange 74 and the second face 78 to form a releasable connection therebetween. The fastening mechanism may comprise a bolt, or other conventional fastener. One or more dowels may be configured to extend between the further flange 74 and the second face 78 to form a releasable connection therebetween and/or provide torque resistance.

The interface and or interface formations of the stator 24 and second section 60 may comprise a substantially annular shape. The interface formation provided on the first section 48 may comprise a substantially annular edge. Where an annular joint 100 is also provided on the front cone, the diameter of the annular interface 70 is greater than that of interface 100.

A plurality of fastening members 80 are disposed around the annular interface to provide a releasable connection between the first section 48 (i.e. via the stator 24) and the second section 60.

The interface formation 68 provided on the second section 60 may comprise a plurality of discrete portions disposed circumferentially around the second section 60. The interface formation 70 provided on the first section 48 may comprise a plurality of discrete portions disposed circumferentially around the second section 60, corresponding to the plurality of discrete portions provided on the second portion. One or more fastening members/mechanisms 80 may be provided between the discrete portions to provide a releasable connection between the first section 48 and the second section 60.

The second section 60 comprises a support 84 for a compressor bearing 86. The compressor may comprise a low pressure, an intermediate pressure compressor or a high pressure compressor. The support 84 may be disposed at the rearward portion 66 of the second section 60, e.g. at the rear end 46. The support 84 is connected to a bearing 86 for rotationally supporting the output shaft of a compressor assembly. The support 84 may be connected to, and/or integrally formed with, the outer race of the bearing 86.

The second section 60 is configured such a load path between the compressor bearing 86 and the stator 24 is discontinuous, i.e. extending across the interface between the stator 24 and second section 60.

Figures 4 and 5 show a gear box 30 for a geared turbofan engine architecture as described above. The gearbox is disposed between, and substantially contained within, the first section 48 and the second section 60. Thus the support structure 42 forms a housing around, e.g. circumferentially around, the gearbox.

The radial positioning of the interface, i.e. as defined by the radial height of the second section 60, is radially outside the outermost edge of the gearbox 30.

The first section 48 may comprise a support 90 for bearing 92 of the output shaft of the gearbox 30. The support 90 is connected to a bearing 92 for rotationally supporting the output shaft of the gearbox 30. The support 90 may be connected to, or integral with, the outer race of the bearing 92. The support 90 may be positioned at an increased radial distance from the principal rotational axis 9 than the fan bearing support 56.

The support 90 may be supported by a bracket/wall portion 88 extending from the wall portion 50 of the first section 48. The bracket may extend rearward and/or radially inward from the wall portion 50. The bracket 88 may be formed integrally with the wall portion 50 or may be formed as a separate component attached to the wall portion 50. The bracket 88 may be obliquely/rearwardly angled with respect to the longitudinal axis. The bracket 88 may be annular in form. The bracket may comprise a branching wall off the wall portion 50.

The bearing support 90 may help support the first section 48, i.e. the front cone.

The second section 60 may comprise a support 96 for bearing 96 of the input shaft of the gearbox 30. The support 96 is connected to a bearing 98 for rotationally supporting the input shaft of the gearbox 30. The support 96 may be connected to, or integral with, the outer race of the bearing 98. The support 96 may be positioned at substantially the same radial distance from the principal rotational axis 9 as the compressor bearing support 84, or else may be radially offset therefrom.

The support 96 may be supported by a bracket/wall portion 94 extending from the wall portion 62 of the second section 60. The bracket may extend forward and/or radially inward from the wall portion 62. The bracket 94 may be formed integrally with the wall portion 62 or may be formed as a separate component attached to the wall portion 62. The bracket 94 may be obliquely/forwardly angled with respect to the longitudinal axis. The bracket 94 may be annular in form. The bracket may comprise a branching wall off the wall portion 62.

The bearing support 96 may help support the second section 60, i.e. the rear cone.

The support structure 42 may comprise any conventional materials, e.g. metallic, polymer and/or composite materials. The composite material may comprise a fibre reinforced polymer, a metal matrix composite, a ceramic matrix composite or combinations thereof.

In normal use, the first 48 and second 60 sections are mounted as shown and the bearings provide the interface with the relevant rotating shafts. The first section 48 and stator array 24 can be mounted as a common piece to the second section 60 and bolted to rigidly hold the assembly for use.

During assembly/maintenance/disassembly, the second section 60 may be separated from the first portion 48 to provide access to an internal area of the gas turbine engine, i.e. radially inside the stator 24. The user removes the fastening members 80 connecting the first section 48 and the second section 60. One of the first section 48 or the second section 60 are then removed to expose the internal area provided between the first section 48 and the second section 60. This may provide access to inter alia: a gearbox; the shaft system; shaft-system components; the bearings located within the first and/or second sections; or any other components/accessories mounted within the support structure.

Access to the gearbox 30 and rear/second section 60 can beneficially be achieved by removal of the front section 48 with the stator 24. The radial positioning of the interface 68, 70 allows a clearance around the gearbox 30 when removing the front cone.

Whilst, for ungeared gas turbine engines there is generally no need to access the space within the bearing support structure, as the bearings and other components are typically positioned on the front and rear sides of the structure as well as the inner bore diameter, rather than the enclosed zone within the bearing support structure.

### Advantages of the bearing support structure:

The support structure reduces the risk of the connection between the first section and the second section failing in the case of radially asymmetric loading of the fan assembly. This can occur, for example due to a fan blade-off or compressor blade-off scenario.

The provision of a joint (i.e. bolted interface) behind the engine section stator removes the joint from the fan load path and instead places it in the compressor load path. This reduces the potential loading the joint is required to withstand, thereby permitting a reduction in the size/weight of the joint assembly and associated bolts.

The lack of a bolted joint in the fan load path may reduce the risk of failure or bolt unwinding, e.g. under large fan blade-off loading.

The support structure may remove the joint from the torque reaction path therefore simplifying the design and reducing the chance of failure, e.g. when using an epicyclic gearbox in which the gearbox ring gear is mounted to the fan load path.

The support structure provides convenient access to the internal area of the gas turbine engine.

It will be understood that the invention is not limited to the embodiments above-described and various modifications and improvements can be made without departing from the concepts described herein within the scope of the following claims.

## Claims

1. A gas turbine engine having a longitudinal axis (9) comprising :
an engine core (11) comprising a turbine (19), a compressor (14), and a core shaft (26) connecting the turbine to the compressor;
a fan (23) located upstream of the engine core (11), the fan comprising a plurality of fan blades;
a gearbox (30) that receives an input from the core shaft (26) and outputs drive to the fan (23) so as to drive the fan at a lower rotational speed than the core shaft (26); and
a bearing support structure (42), the bearing support structure (42) comprising:
a plurality of stator vanes (24) disposed circumferentially about the longitudinal axis (9) in an annular fashion to form a ring of stator vanes;
a first section (48) depending forwardly from the plurality of stator vanes (24) relative to the longitudinal axis (9);
a second section (60) depending rearwardly from the plurality of stator vanes (24) relative to the longitudinal axis (9);
a first bearing assembly (58) being supported relative to the plurality of stator vanes (24) by the first section (48); and
a second bearing assembly (86) being supported relative to the plurality of stator vanes (24) by the second section (60), wherein:
the second section (60) is detachably mounted to the plurality of stator vanes (24) at a joint (70), the radial positioning of the joint (70) being radially outside the outermost edge of the gearbox (30);
the first section (48) and second section (60) comprise wall sections depending radially inwardly of the plurality of stator vanes (24) so as to define a housing for an internal volume between the first section, the second section and the longitudinal axis (9), the housing being formed by the support structure (42) around the gearbox; and
either:
(i) the stator vanes (24) are integrally formed with the first section (48); or
(ii) the first section (48) is mounted to the stator vanes (24) at a further joint, the further joint being closer to the longitudinal axis than the joint at which the second section (60) is detachably mounted to the plurality of stator vanes (24), with the further joint being at a radial height from the longitudinal axis that is less than the radial height of the gearbox.

2. The gas turbine engine of claim 1, wherein at least a portion of the first section (48) is integral with the plurality of stator vanes (24) such that said portion of the first section (48) is not detachable therefrom.

3. The gas turbine engine of claim 1, wherein the first bearing assembly (58) comprises a fan bearing assembly and/or the second bearing assembly (86) comprises a compressor bearing assembly.

4. The gas turbine engine of any preceding claim, wherein the first section (48) and/or second section (60) are substantially conical in form.

5. The gas turbine engine of any preceding claim, wherein the gearbox (30) is mounted radially inside an inner end of the plurality of stator vanes (24) and/or within the axial extent of the first (48) and/or second (60) section.

6. The gas turbine engine of any preceding claim, wherein the first section comprises a support for a gearbox output bearing (92) and/or the second section comprises a support for a gearbox input bearing (94).

7. The gas turbine engine of any preceding claim, comprising an array of at least twenty stator vanes (24) circumferentially spaced about the longitudinal axis (9).

## Patentansprüche

1. Gasturbinentriebwerk mit einer Längsachse (9), umfassend :
einen Triebwerkskern (11), der eine Turbine (19), einen Verdichter (14) und eine Kernwelle (26) umfasst, welche die Turbine mit dem Verdichter verbindet;
ein Gebläse (23), das sich stromaufwärts des Triebwerkkerns (11) befindet, wobei das Gebläse eine Vielzahl von Gebläseschaufeln umfasst;
ein Getriebe (30), das eine Eingabe von der Kernwelle (26) empfängt und Antrieb an das Gebläse (23) ausgibt, um das Gebläse bei einer niedrigeren Drehzahl als die Kernwelle (26) anzutreiben; und
eine Lagerträgerstruktur (42), wobei die Lagerträgerstruktur (42) Folgendes umfasst:
eine Vielzahl von Statorschaufeln (24), die umlaufend um die Längsachse (9) in einer ringförmigen Weise angeordnet ist, um einen Ring aus Statorschaufeln zu bilden;
einen ersten Abschnitt (48), der nach vorne von der Vielzahl von Statorschaufeln (24) relativ zu der Längsachse (9) abhängt;
einen zweiten Abschnitt (60), der nach hinten von der Vielzahl von Statorschaufeln (24) relativ zu der Längsachse (9) abhängt;
eine erste Lagerbaugruppe (58), die relativ zu der Vielzahl von Statorschaufeln (24) durch den ersten Abschnitt (48) getragen wird; und
eine zweite Lagerbaugruppe (86), die relativ zu der Vielzahl von Statorschaufeln (24) durch den zweiten Abschnitt (60) getragen wird, wobei:
der zweite Abschnitt (60) abnehmbar an der Vielzahl von Statorschaufeln (24) an einer Verbindung (70) montiert ist, wobei die radiale Positionierung der Verbindung (70) radial außerhalb der äußersten Kante des Getriebes (30) ist;
der erste Abschnitt (48) und der zweite Abschnitt (60) Wandabschnitte umfassen, die radial nach innen von der Vielzahl von Statorschaufeln (24) abhängen, um ein Gehäuse für ein Innenvolumen zwischen dem ersten Abschnitt, dem zweiten Abschnitt und der Längsachse (9) zu definieren, wobei das Gehäuse durch die Trägerstruktur (42) um das Getriebe gebildet ist; und
entweder:
(i) die Statorschaufeln (24) einstückig mit dem ersten Abschnitt (48) gebildet sind; oder
(ii) der erste Abschnitt (48) an den Statorschaufeln (24) an einer weiteren Verbindung montiert ist, wobei die weitere Verbindung näher an der Längsachse als die Verbindung ist, an welcher der zweite Abschnitt (60) abnehmbar an der Vielzahl von Statorschaufeln (24) montiert ist, wobei die weitere Verbindung in einer radialen Höhe von der Längsachse ist, die geringer als die radiale Höhe des Getriebes ist.

2. Gasturbinentriebwerk nach Anspruch 1, wobei zumindest ein Teil des ersten Abschnittes (48) einstückig mit der Vielzahl von Statorschaufeln (24) ist, sodass der Teil des ersten Abschnittes (48) nicht davon abnehmbar ist.

3. Gasturbinentriebwerk nach Anspruch 1, wobei die erste Lagerbaugruppe (58) eine Gebläselagerbaugruppe umfasst und/oder die zweite Lagerbaugruppe (86) eine Verdichterlagerbaugruppe umfasst.

4. Gasturbinentriebwerk nach einem vorhergehenden Anspruch, wobei der erste Abschnitt (48) und/oder der zweite Abschnitt (60) im Wesentlichen konisch in Form sind.

5. Gasturbinentriebwerk nach einem vorhergehenden Anspruch, wobei das Getriebe (30) radial innerhalb eines inneren Endes der Vielzahl von Statorschaufeln (24) und/oder innerhalb der axialen Erstreckung des ersten (48) und/oder des zweiten (60) Abschnittes montiert ist.

6. Gasturbinentriebwerk nach einem vorhergehenden Anspruch, wobei der erste Abschnitt einen Träger für ein Getriebeausgangslager (92) umfasst und/oder der zweite Abschnitt einen Träger für ein Getriebeeingangslager (94) umfasst.

7. Gasturbinentriebwerk nach einem vorhergehenden Anspruch, umfassend eine Anordnung von zumindest zwanzig Statorschaufeln (24), die umlaufend um die Längsachse (9) beabstandet ist.

## Revendications

1. Moteur à turbine à gaz comportant un axe longitudinal (9) comprenant :
un noyau de moteur (11) comprenant une turbine (19), un compresseur (14) et un arbre de noyau (26) reliant la turbine au compresseur ;
une soufflante (23) située en amont du noyau de moteur (11), la soufflante comprenant une pluralité de pales de soufflante ;
une boîte d'engrenages (30) qui reçoit une entrée en provenance de l'arbre de noyau (26) et délivre en sortie l'entraînement à la soufflante (23) de façon à entraîner la soufflante à une vitesse de rotation inférieure à celle de l'arbre de noyau (26) ; et
une structure de support de palier (42), la structure de support de palier (42) comprenant :
une pluralité d'aubes (24) de stator disposées circonférentiellement autour de l'axe longitudinal (9) de manière annulaire pour former un anneau d'aubes de stator ;
une première section (48) dépendant vers l'avant de la pluralité d'aubes (24) de stator par rapport à l'axe longitudinal (9) ;
une seconde section (60) dépendant vers l'arrière de la pluralité d'aubes (24) de stator par rapport à l'axe longitudinal (9) ;
un premier ensemble palier (58) étant supporté par rapport à la pluralité d'aubes (24) de stator par la première section (48) ; et
un second ensemble palier (86) étant supporté par rapport à la pluralité d'aubes (24) de stator par la seconde section (60),
ladite seconde section (60) étant montée de manière amovible sur la pluralité d'aubes (24) de stator au niveau d'un joint (70), le positionnement radial du joint (70) étant radialement à l'extérieur du bord le plus extérieur de la boîte d'engrenages (30) ;
la première section (48) et la seconde section (60) comprenant des sections de paroi dépendant radialement vers l'intérieur de la pluralité d'aubes (24) de stator de façon à définir
un logement pour un volume intérieur entre la première section, la seconde section et l'axe longitudinal (9), le logement étant formé par la structure de support (42) autour de la boîte d'engrenages ; et
(i) lesdites aubes (24) de stator étant formées d'un seul tenant avec la première section (48) ; ou
(ii) ladite première section (48) étant montée sur les aubes (24) de stator au niveau d'un joint supplémentaire, le joint supplémentaire étant plus proche de l'axe longitudinal que le joint au niveau duquel la seconde section (60) est montée de manière amovible sur la pluralité d'aubes (24) de stator, ledit joint supplémentaire étant à une hauteur radiale par rapport à l'axe longitudinal qui est inférieure à la hauteur radiale de la boîte d'engrenages.

2. Moteur à turbine à gaz de la revendication 1, au moins une partie de la première section (48) étant solidaire de la pluralité d'aubes (24) de stator de sorte que ladite partie de la première section (48) ne soit pas détachable de celle-ci.

3. Moteur à turbine à gaz de la revendication 1, ledit premier ensemble palier (58) comprenant un ensemble palier de soufflante et/ou ledit second ensemble palier (86) comprenant un ensemble palier de compresseur.

4. Moteur à turbine à gaz d'une quelconque revendication précédente, ladite première section (48) et/ou ladite seconde section (60) étant de forme sensiblement conique.

5. Moteur à turbine à gaz d'une quelconque revendication précédente, ladite boîte d'engrenages (30) étant montée radialement à l'intérieur d'une extrémité interne de la pluralité d'aubes (24) de stator et/ou dans l'étendue axiale de la première (48) et/ou de la seconde (60) section.

6. Moteur à turbine à gaz d'une quelconque revendication précédente, ladite première section comprenant un support pour un palier de sortie (92) de boîte d'engrenages et/ou ladite seconde section comprenant un support pour un palier d'entrée (94) de boîte d'engrenages.

7. Moteur à turbine à gaz d'une quelconque revendication précédente, comprenant un groupement d'au moins vingt aubes (24) de stator espacées circonférentiellement autour de l'axe longitudinal (9).
